# EUROPEAN PATENT SPECIFICATION

(11) **EP 2 795 939 B1**
(45) Date of publication and mention of the grant of the patent: **23.05.2018**
(21) Application number: 12859972.7
(22) Date of filing: 23.12.2012
(51) Int. Cl.: H04W 4/20, H04W 12/08, H04L 29/06

(54) **METHOD, APPARATUS AND COMPUTER READABLE STORAGE MEDIUM FOR PARENTAL CONTROL OF A DEVICE**
VERFAHREN, VORRICHTUNG UND COMPUTERLESBARES SPEICHERMEDIUM FÜR DIE STEUERUNG EINER KINDERSICHERUNG EINES GERÄTES
MÉTHODE; APPAREIL ET LOGICIEL DE CONTRÔLE PARENTAL D'UN DISPOSITIF

(30) Priority: 23.12.2011 US 201161580137 P; 22.12.2012 US 201213726027
(43) Date of publication of application: 29.10.2014
(73) Proprietor: Microsoft Technology Licensing, LLC, Redmond, WA 98052 (US)
(72) Inventor: KING, Joseph Spencer, Redmond, Washington 98052-6399 (US); MATTHEWS, Joseph H., Redmond, Washington 98052-6399 (US); SCHRADER, Joseph A., Redmond, Washington 98052-6399 (US); CHEN, Ted Tai-Yu, Redmond, Washington 98052-6399 (US)
(74) Representative: CMS Cameron McKenna Nabarro Olswang LLP
(86) International application number: PCT/US2012/071546
(87) International publication number: WO 2013/096944

(56) References cited:
- EP-A2- 2 369 864
- WO-A1-2011/135359
- US-A1- 2011 065 419
- US-A1- 2011 237 221
- US-A1- 2011 244 837
- US-A1- 2011 283 311
- US-B1- 7 869 792
- US-B2- 7 302 272

## Description

### BACKGROUND

Many types of devices, such as mobile phones, tablet devices, and other computing, communication, and entertainment devices increasingly offer more functions, applications, and features which are beneficial to a user, and can enhance one's personal time as well as work and social activities. For example, not only can a mobile phone be used for text, email, and voice communications, but may also be used for entertainment, such as to listen to music, surf the Internet, watch video content, gaming, and for photo and video imaging. Similarly, a portable tablet device may be utilized for email, browser, navigation, and other computing applications, as well as for the various entertainment and photo features. In addition to the many computing, communication, and entertainment applications that are available to a user of a mobile phone or tablet device, a seemingly unlimited number of third-party applications and features are also available for download to a device.

Children and teenagers with connected mobile devices may have difficulty balancing the time that they spend in front of the many various devices, commonly referred to as "screentime", with other activities, including spending time with their family and getting enough sleep. Parents often have to regulate the amount of children's time with devices, such as texting, talking on the phone, watching television, and surfing the Internet. When children over use such devices, the parents may have to step-in and physically separate a device from a child, such as by taking a mobile phone or tablet computer away at bedtime.

US 2011/0244837 A1 (Murata et al.) discloses a function limitation control method for a child's mobile phone terminal on which a function limitation is placed from the parent's mobile phone via a server managing the limitation. The function limitation is dependent of the relative location of the child's and parent's mobile phone to each other. A report of the child's activity regarding the web, phone calls or a function can be generated by the server and sent on request to parent's mobile phone.

US 2011/0283311 A1 (Luong) discloses a parental review application which enables reviewing log entries of monitored media content accessed by different restricted users via different devices. A settings region is also displayed for setting parental control settings relating to a selected media content of the log. The settings may be particular to the restricted user and/or device that accessed the media content.

### SUMMARY

The present invention is disclosed in appended independent claims 1, 6 and 11. This Summary introduces features and concepts of mobile device parental control, which is further described below in the Detailed Description and/or shown in the Figures. This Summary should not be considered to describe essential features of the claimed subject matter, nor used to determine or limit the scope of the claimed subject matter.

In embodiments, a controlling device includes a communication interface for control communication with one or more associated devices of the controlling device, and the associated devices correspond to members of a group. An integrated display device displays a parental control user interface. A parental control service is implemented to receive an input of a device control via the parental control user interface, where the device control is initiated for one or more of the associated devices that are controllable by the controlling device. The parental control service can then initiate communication of the device control to the associated devices that are controlled by the controlling device.

In embodiments, the controlling device and the associated devices are mobile phones or mobile computing devices configured for wireless communication, and the members of the group are family members of a family, or business members of a business. A device control can be initiated to control a function, a setting, access, and/or a restriction of one or more of the associated devices. The parental control service can also control communication of group information to the associated devices for the members of the group.

The parental control service can receive feature use reports from the associated devices, where a feature use report indicates use of a device feature by a user of an associated device. The parental control service can then generate a device use summary of device features for each of the associated devices, and the device use summaries can be displayed on the parental control user interface. A feature use report received from an associated device can include text message content, email content, and/or identification of a new contact. A feature use report can also indicate Internet use and include Internet sites visited, or indications of content downloads, such as a video, a game, a music file, and/or a purchase. A feature use report can also include telephone call details associated with a telephone call to or from an associated device.

In other embodiments, a parental control system includes a network service (e.g., a network of one or more server devices) that executes computer instructions as a parental control service. The parental control service is implemented to receive a device control from a controlling device when the device control is initiated by a user of the controlling device, where the device control is initiated for associated devices that correspond to members of a group. The parental control service at the parental control system can then determine the associated devices that are controllable by the controlling device based on identifiers of the controlling device and the associated devices, and communicate the device control received from the controlling device to the associated devices.

### BRIEF DESCRIPTION OF THE DRAWINGS

Embodiments of mobile device parental control are described with reference to the following Figures. The same numbers may be used throughout to reference like features and components that are shown in the Figures:
FIG. 1 illustrates an example environment in which various embodiments of mobile device parental control can be implemented;
FIG. 2 is an example of a system showing two different examples of hubs for a family;
FIG. 3 illustrates example user interfaces of parent dashboard;
FIG. 4 illustrates examples of quiet time user interfaces when quiet time is active on a device, such as a lock screen displayed on a mobile phone to indicate the duration for quiet time;
FIG. 5 illustrates an example system that includes mobile devices and that are examples of the client device as described with reference to the previous figures;
FIG. 6 illustrates an example mobile device in which embodiments of mobile device parental control can be implemented;
FIG. 7 illustrates an example procedure of mobile device parental control;
FIG. 8 illustrates another example procedure of mobile device parental control;
FIG. 9 illustrates an example system in which embodiments of hubs can be implemented;
FIG. 10 illustrates another example system in which various embodiments of the previously described techniques can be implemented;
FIG. 11 further illustrates the various client device services that are described with reference to the previous sections; and
FIG. 12 illustrates an example system that includes an example device, which can implement embodiments of private interaction hubs.

### DETAILED DESCRIPTION

### Overview

Parental control techniques are described. In some embodiments, techniques involving a hub are described that support communication between members of the hub to share content. A hub, for instance, may be specified for a family and thus family members may join the hub to share content, such as messages, photos, and so on. A variety of other hubs may also be configured, such as for employees, friends, and so on. Thus, sharing of content may be performed to members of the hub as a whole instead of involving individual communications are previously required using conventional techniques.

Additionally, these techniques may employ use of a parental control service to control access to content and other functionality of one client device by another client device. A parent, for instance, may interact with a parental control service to control access permitted by a child with an associated client device, such as a mobile phone, tablet and so on. A variety of different techniques may be employed to manage this access, such as hub interaction, implementation of a parent dashboard, access to age appropriate content, use of safe social networking techniques, quiet time, and so on. Further discussion of these techniques may be found in relation to the following discussion.

While features and concepts of mobile device parental control can be implemented in any number of different devices, systems, networks, environments, and/or configurations, embodiments of mobile device parental control are described in the context of the following example devices, systems, services, and methods. For example, even though a parent/child relationship is described, it should be readily apparent that this relationship may also be utilized for a variety of other similar controlling device/controlled device implementations, such as employer/employee, teacher/student, and so on.

### Example Environment

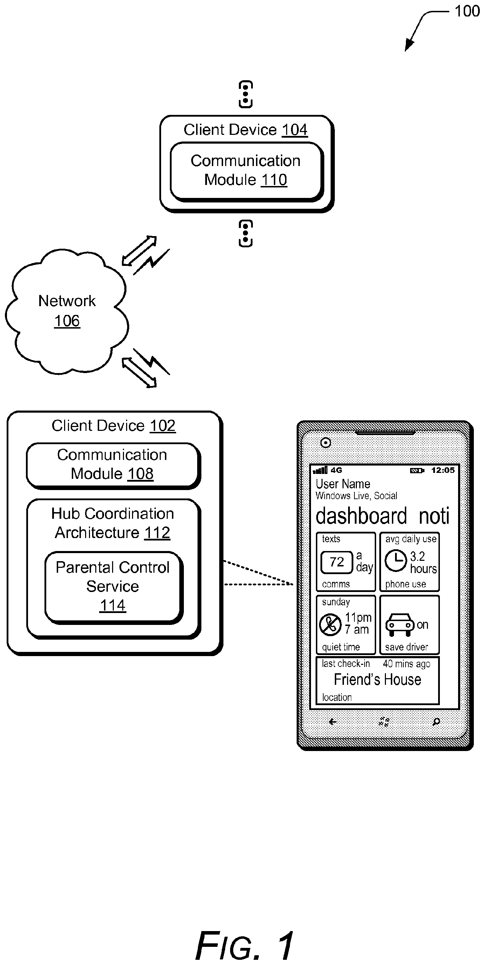

FIG. 1 illustrates an example environment 100 in which various embodiments of mobile device parental control can be implemented. The example system includes a client device 102 communicatively coupled to another client device 104 via a network. The client devices 102, 104 may be configured according to a variety of different computing device configurations. In the illustrated example, the client device 102 is configured as a mobile device, such as a mobile phone 104 although other mobile device configurations are also contemplated, such as a tablet device, communication device, convertible device, entertainment, gaming, navigation, and/or other type of portable electronic device. The client devices 102, 104 may also assume a variety of other computing device configurations, such as traditional PCs, laptops, and so on. Although a single instance of the client device 104 is illustrated, this device may be representative of a plurality of different devices and thus reference in the following discussion may be made to client device 104 in single or in plural form. Additional examples of functionality that may be incorporated as part of the client device 102, 104 may be found later in the discussion.

The client devices 102, 104 are illustrated as including respective communication modules 108, 110. The communication modules 108, 110 are representative of functionality of the devices to communicate via the network 106, such as to communicate with each other. The communication modules 108, 110 may perform this communication using a variety of techniques, such as to support voice communication, text messaging (e.g., SMS, MMS), instant messaging, communication via a social network service, email, near-field communications (NFC) and so on. Accordingly, the client device 102, 104 may utilize a variety of different techniques to communicate with each other.

The client device 102 is also illustrated as supporting a hub coordination architecture 112. The hub coordination architecture 112 is representative of functionality to provide a hub that supports communication between members of the hub to share data. The hub, for instance, may include a user interface via which users of the client device 102, 104 may share content based on membership to the hub. Accordingly, the membership may act to support appropriate permissions on content between the users of the hub based on membership to the hub. A variety of different content may be shared via the hub, such as messaging, photos, links, background image of the hub, videos, and so on.

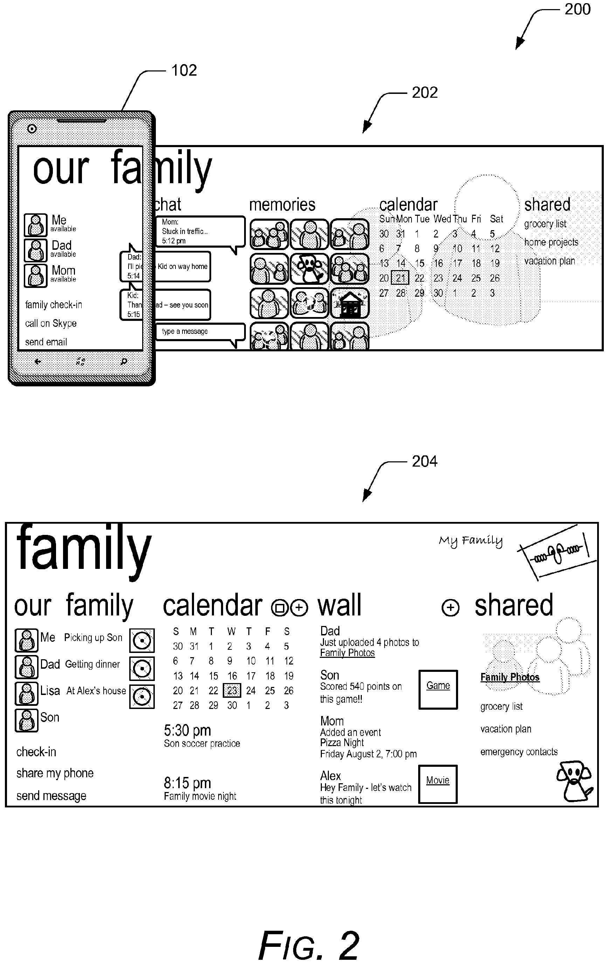

Designated member relationships can be utilized to define how the data and information is managed in relation to the hub, and can be implemented to leverage the social contract embodied in the hub. In embodiments, the hub is implemented by the hub coordination architecture 112 as a user interface and/or a client device application for integration and aggregation of the hub-orientated communications, activities, and information. A hub can be implemented as a private, shared space that is limited to access by defined members of the hub. The hub, for instance, may contain links to other members' profiles, and based on restriction settings, allows aggregation for visibility of some of other members' data and information within the hub, and so on. The hub may also be configured to share a group calendar which can be viewed and edited, a common text message window, a posting board, a shared photo album, a check-in feature, and any other type of shared information as further described as follows and show in relation to FIG 2.

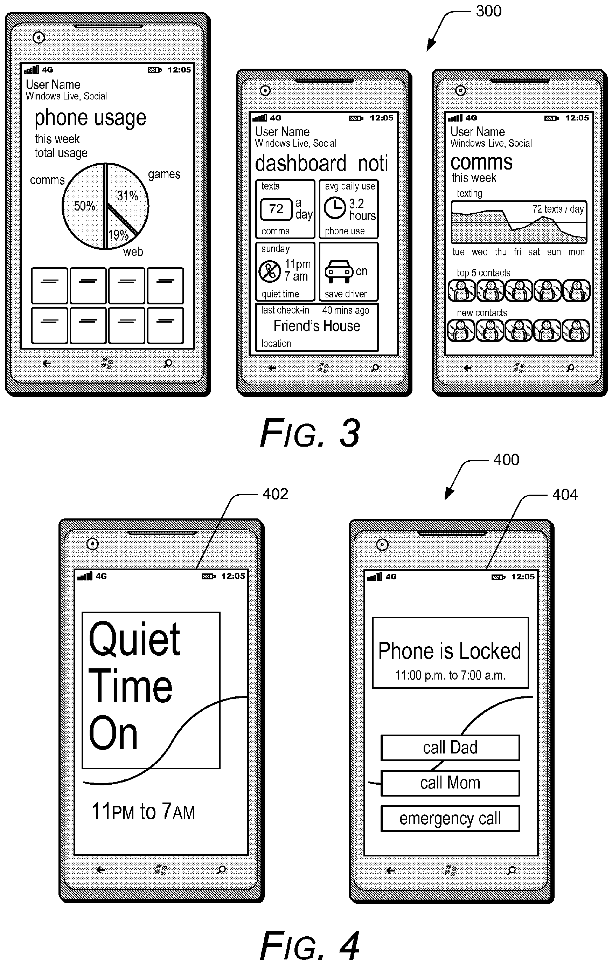

An example of this functionality is illustrated in FIG. 1 as a parental control service 114. The parental control service is representative of functionality of client device 102 to control operation of client device 104, such as in a parent/child relationship, employer/employee relationship, and so on. A variety of different functionality may be implemented by the parental control service 114, such as hub interaction, implementation of a parent dashboard, access to age appropriate content, use of safe social networking techniques, quiet time, and so on. Further discussion of these techniques may be found in relation to the discussion of FIG. 3 and beyond.

FIG. 2 is an example of a system 200 showing two different examples of hub user interfaces for a family-orientated hub. The description, layout, orientation, features, and organization of the text, images, photos, graphics, links, data, information, and presentation features shown with reference to the hub user interfaces, as well as with reference to any other user interfaces described herein and/or shown in the figures, are merely examples that may be altered in any aspect for various embodiments and/or implementations of mobile device check-in.

The hub is a central space for membership-orientated coordination of communications, activities, information, and integration. Designated member relationships can be utilized to define how the data and information is managed, and can be implemented to leverage the social contract, such as between members of a defined familial group in the illustrated example. In one or more implementations, the hub is implemented as a user interface (e.g., via a client device application) for integration and aggregation of the membership-orientated communications, activities, data, and information. A hub can be implemented as a private, shared space between defined members. The hub contains links to other members' profiles, and based on restriction settings, allows aggregation for visibility of some of other members' data and information within the hub. The hub may share a group calendar which can be viewed and edited, a common text message window, a posting board, a shared photo album, a check-in feature, and any other type of shared information.

Devices and/or device accounts can be associated within a set of devices or device accounts (e.g., a family phone account, user accounts, a connected set of devices, and so on), and all or a subset of the devices or accounts can communicate with other devices or accounts. The members of a hub can be defined by any number of different classes of people, such as Junior, Teen, Mom, Dad, (or Parent), Grandparent, Nanny, Life-Coach, and so on for the illustrated example of a family. Further, the members of a family can be defined to distinguish a live-in Nanny from a Babysitter, for example.

Additionally, membership of the hub as well as use of the hub by the members can be controlled by a select collection of users, such as one or two mobile phones by the associated users of the client devices. For example, one of the members in the hub can be the designated control person, such as a Mom who runs the household, an employer, and so on.

From a single configuration of the members, the hub can be provisioned, setup, and propagated out, e.g., automatically. The features and configuration of a hub may default to an automatic, easy setup, but any rule, feature, or configuration aspect can be readily modified by a user. Provisioning a hub may be based on billing, e.g., a family billing plan. However, if a phone device is changed to a different carrier, for example, the phone device can still receive texts related to the hub. Alternatively or in addition, provisioning a hub can be based on email addresses, phone numbers, user account identifiers, or any other identifier.

A retail person selling a new phone package, for instance, can easily identify the members each to their new phone devices and initiate the hub being instantiated. From a consumer perspective, it just works and members can walk out of the store all set up. All of the data and information can be shared with a single selection, and thus the members do not have to share each item (e.g., a grocery list, photos, calendar, etc.) individually and separately.

The hub user interface may act as a shared space that is customizable and provides for user-generated and shared content. Some information can be shared, while other information is not. For example, Mom's complete Christmas list is not viewable by the other family members, but Dad and Kids can add to the list (and only view their contribution). Hub setup may be performed "a la carte," meaning only the features that members want displayed on the hub wall can be selected. For example, Mom wants to see the shopping list, whereas Dad does not shop and so wants to avoid having the list displayed on his device, yet he could still access the shopping list to add items when desired.

The hub user interface integrates functions, calendar functionality, event and/or data summaries (i.e., on the "wall"), as well as content that is shared between the members of the hub (e.g., lists, documents, etc.). For example, the hub user interface may include a "family check-in" or "check-in" option. The hub user interface may also include a chat section where location check-ins messaged are displayed along with other messages interchanged between the members of the hub. The hub "wall" is representative of an area via which members of the group may add to as desired, like a lunchroom bulletin board, family refrigerator, and so on. In implementations, the information can be aggregated in pillars or columns and shown on the hub wall as illustrated. The hub wall can also represent an interrelation between any of the information and data that appears on the wall and its placement in time. The hub settings provide that a user can control which functions are integrated and displayed within the hub, such as on the wall.

The hub information may also be context relevant to the members of the hub, and the calendar includes shared hub events. Calendar updates can be posted as notice events on the wall, and a user can look at the wall to see upcoming hub events, or the events that pertain to one or more other members of the hub. Messaging may also be performed that is private among the members of the hub. A member can instant text (or other communication) to all other members in the hub. Texting - such as for a work meeting - can divide each members' display on their respective devices into individual screens for each member.

The hub may also be extensible, and may link to a hard drive on a home computer, or sync to just one of the other devices, the manager, or cloud control (e.g., from a network-based service). The hub may also be extensible to third parties that add a note on the hub wall, such as implemented with application program interfaces (APIs) for functions to post data to the hub. A third-party application, however, would not have access to the context of the hub wall, such as to obtain or display hub data. In certain embodiments, the private information and data could be encrypted and only decrypted by the phone devices that are associated with the hub.

Thus, the hub supported by the hub coordination architecture 112 may be thought of as a central space for coordination of communications, activities, information, and integration of members of the hub. Hubs may be defined to support a variety of different membership, such as for family members, coworkers, friends, acquaintances, fan clubs, and so forth. Therefore, although examples are discussed that relate to a family in the following discussion it should be readily apparent that membership in the hub may be defined in a variety of other ways without departing from the scope thereof. Accordingly, the hub coordination architecture 112 may be used to support a variety of different functionality. An example of this functionality is illustrated as a parental control service 114 as further described below and shown in relation to the corresponding figure. Further aspects of hubs are also described further herein.

### Parent Dashboard

A parent dashboard is a privately shared space that has limited accessibility by one or more family members of a family group to view and control family-orientated information and family members' mobile device functions, features, and settings. The parent dashboard can display a visual summary of an individual family member's information, such as, phone usage, history, restrictions, settings, and the like. Furthermore, the parent dashboard allows a family control member to set restrictions, grant accesses, and allocate information to the other family members in a family group.

In embodiments, the parent dashboard is implemented as a user interface of an application and/or a client device application. Embodiments of a parent dashboard include any one or combination of implementation features, such as described in the following paragraphs. Devices and/or device accounts can be associated within a set of devices or device accounts (e.g., a family phone account, live accounts, a connected set of devices, etc.), and all or a subset of the devices or accounts can communicate with other devices or accounts.

FIG. 3 illustrates example user interfaces 300 of parent dashboard. A hub control member (or family control member) can review the parent dashboard on a mobile phone or other mobile device to learn how other family members are using their respective mobile devices. A representation of a hub member can be selected to initiate an overall display of the member's device usage information, such as a number of texts communicated and received, who the member is communicating with, new contacts that may have been established, etc. The parent dashboard can also show the Internet sites a hub member has visited, the videos that have been displayed for viewing on the member's phone, music and/or games that have been downloaded, a purchase that has a parental advisory warning, etc. In an implementation, the top five (or top "X') applications, videos, games, etc. may be displayed on the parent dashboard.

The parent dashboard can also be implemented to display the last changes and/or setting adjustments to the dashboard itself, so that for example, if a kid changes the parent dashboard on a hub member's phone device, the parent will be able to detect the changed settings. The parent dashboard may be implemented for viewing with an additional level of security on the authoritative, parent's phone device, such as by biometric detection or by entering a different access code used to restrict access to the parent dashboard.

The parent dashboard can include any type of settings and control selections that are user-selectable or voice activated. A parent or other controlling entity can enforce the amount of television time, gaming time, and general device usage on all connected devices in the household that are utilized by hub members. The parent dashboard, for instance, can also be utilized to determine new contacts of a child or kid family member that has a mobile device and/or to monitor texts for identifiable language

### Age Appropriate Content

An age appropriate content feature provides settings within each family member's phone or mobile device that identifies content and media restrictions based on the age of a family member. In embodiments, the age appropriate feature can be implemented as part of the parent dashboard and control service, and with a client device application. Embodiments of the age appropriate content feature can provide the restrictions and settings based on the defined PRG ratings and/or based on parental optional configuration settings.

### Safe Social Networking

Safe social networking implements a common framework to define safe social networking rules. In embodiments, safe social networking features can be implemented as a user interface and/or as a client device application, and may be integrated as part of the parent dashboard and parental control service. Embodiments of the safe social networking features include any one or combination of implementation features, such as described in the following paragraphs.

A safe social networking application or service may be integrated with the parent dashboard, such as for a child's dashboard, and the parent can see the most frequent social network correspondents and the last social network new friends. The configuration of the policy and the aggregation of the service can be associated with the parent dashboard concept.

Teens (*e.g*., individuals aged from 12-17) are the heaviest users of the Internet (approximately 93%), cell phones (approximately 75%), and social networking sites (approximately 73%). With the use of smart phones and other mobile computing devices on the rise and the ease of using social networking applications on the phones becoming simpler, the cases of kids, and even underage kids, using these applications on smart phones and other mobile computing devices is also on the rise. There have been numerous cases in the news about how the child is friended by an adult or a suspicious adult. It can be difficult for parents to track and monitor the various friends that these teens interact with and ensure safe social networking.

The safe social networking application or service is implemented to define and enforce a safe social networking experience for this demographic. A new definition of allowable social networking content (metadata) that defines settings for various applications that interact with social networking sites can be implemented. The safe social networking application or service allows users to create a common framework to define safe social networking rules. When a device, such as a television, mobile phone, computing device, and the like boots up, it connects to a network-based service and downloads the "safe social networking" metadata, and uses this metadata to set various controls on the device to ensure a safe social networking experience.

The safe social networking application or service provides an easy way for a user to configure a safe social networking policy that can be enforced on all devices. The safe social networking provides parental control over approving kids' friends, an integrated background check and feedback mechanism, and defines safe social networking policies that are pushed down to a phone and other devices. The safe social networking application or service also provides a definition of safe social networking policy per user for access across various devices. The safe social networking policy can be defined on a cloud service. A computing and/or electronic device boots up and then downloads the safe social networking policy from the cloud-based or other networked service. The access to various social networking sites, applications, and the corresponding functionality is based on the safe social networking policy definition.

The following describes an example safe social networking policy definition that a user can create, and that can be accessed by the devices to provide for a safe social networking experience for teens and tweens. For example, various elements of a social networking site can be controlled for different device platforms (*e.g*., computer, mobile phone, etc.), such as: friends to add, public events, game requests, advertisements, questions, photos, groups, notes, deals, marketplace, links, privacy settings, block lists, friend requests, family requests, page administration, and/or any other elements of a social networking site.

### Quiet Time

A quiet time feature can be implemented by a control user to set usage and/or function restrictions on other phone devices, such as other family members' devices in a family group. The usage and/or function restrictions can be implemented for time-specific periods and/or based on the geo-location of a family member's phone or other mobile device. The quiet zone features can be implemented as a user interface and/or client device application or service. Embodiments of quiet time include any one or combination of implementation features, such as described in the following paragraphs. Devices and/or device accounts can be associated within a set of devices or device accounts (*e.g.*, a family phone account, live accounts, a connected set of devices, etc.), and all or a subset of the devices or accounts can communicate with other devices or accounts.

The quiet time settings for the hours and/or days in effect on a per-user basis can be enabled and/or disabled via a user interface that includes time and day setting options common in scheduling features, such as for reminders and meetings. The quiet time settings also allow a user to define what aspects of a device are disabled when quiet time is enabled, such as when doing anything, playing games, communicating, etc. A device that has quiet time enabled can display an indicator that quiet time is enabled, such as an icon next to the current time and day, or a display message that indicates quiet time is active (*e.g*., displaying an icon or message "Quiet Time" on the device's home screen or lock screen).

FIG. 4 illustrates examples 400 of quiet time user interfaces when quiet time is active on a device, such as a lock screen 402 displayed on a mobile phone to indicate the duration for quiet time (*e.g*., displayed text "11PM to 7AM"). Another lock screen 404 is an example of a display that indicates the phone is locked, but capable of enabling critical functionality like emergency calls or communicating with parents or the individual who setup the quiet time period. In this manner, the user of the device can still perform critical functions or negotiate with the parent or guardian to disable the quiet time setting.

Quiet time provides parental controls of friends, family, and kids that have mobile phones or other mobile computing devices on a person's phone bill account. The person responsible for paying the bill can receive notice when friends and family exceed text and data rates, and a parent can disable a child's phone directly from the parent's phone. With remote parental controls, a parent can initiate a phone curfew or timeout. Rules can be applied for mobile phone plans for data, text, and voice limits to automatically shut down the phone. There may be exceptions for emergency calls and messaging.

Quiet time may be time and/or location dependent. A mobile device may also begin to learn and infer the regular schedule of a user, such as when a kid is in class at school and then out of school. This may tie in with a family hub calendar to initiate various quiet time modes and settings. Quiet time implements restricted functionality, rather than control of the quieted device. This may be implemented as a group quiet function, such as during dinner and all family member devices are quieted. Quiet time may also be implemented as a one-button shut-down selection, such as for church, in a movie, or to limit just gaming, and so on. Quiet time may be implemented at a business or location, such as at a church, movie theater, or coffee shop, and patron's phone devices are quieted. Quiet time may be disabled so that a quieted device is reactivated by bumping the quieted device with the parent control device (for example, by using NFC) from which the quiet time was activated.

### Quiet Zone

Similar to the quiet time feature, a quiet zone feature can be implemented by a control user to quiet other phone devices, such as other hub members' devices in a hub, based on location, time, event, and/or the dynamic status of the membership of the hub. The quiet zone restrictions can be implemented for time-specific periods and/or based on the geo-location of a member's phone or other mobile device. The quiet zone features can be implemented as a user interface and/or client device application or service. Embodiments of quiet zone can include any of the implementation features describe with reference to the quiet time features. Additionally, implementations of quiet zone may be initiated inside a car with hub members so as not distract the driver with noise, music, and other sounds from the other members' devices.

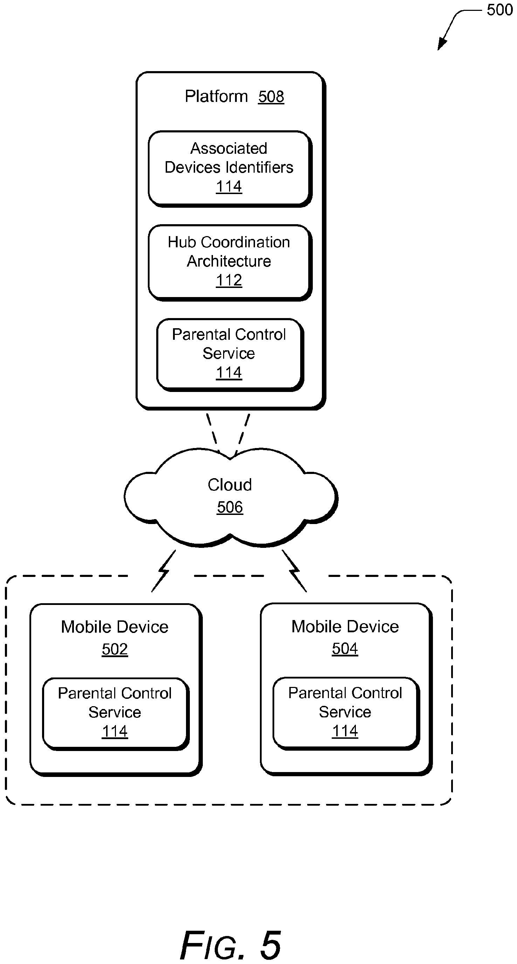

FIG. 5 illustrates an example system 500 that includes mobile devices 502 and 504 that are examples of the client device 102 as described with reference to the previous figures. In embodiments, the mobile devices 502 and 504 can each be associated with a different user, and the users are defined members of a hub which is illustrated through use of a dashed line in FIG. 5, which may include two or more associated devices. The mobile devices each include an implementation of the parental control service 114 as described with reference to the previous FIGS. 1-4. In the example system 500, multiple devices can be interconnected through a central computing device or system, which may be local to the multiple devices or may be located remotely from the multiple devices. Alternatively, or in addition, the multiple devices may also be connected together using a peer-to-peer communication network.

In embodiments, the central computing device may be a cloud 506 of one or more server computers that are connected to the multiple devices through a network, the Internet, or other data communication link. In embodiments, this interconnection architecture enables functionality across multiple devices to provide a networked service environment of the multiple devices. Each of the devices may have different physical configurations and capabilities, and the central computing device can utilize a platform 508 to maintain the associated devices identifiers 114, and implement the hub coordination architecture 112 and/or the parental control service 114 in embodiments of mobile device parental control.

The cloud 506 includes and/or is representative of the platform 508 for the networked service components (*e.g*., the parental control service 114) that implements embodiments of mobile device parental control. The platform abstracts underlying functionality of hardware, such as server devices, and/or software resources of the cloud. The networked service components may include applications and/or data that can be utilized while computer processing is executed on servers that are remote from the mobile devices 502 and 504.

In embodiments, the parental control service 114 at the platform 508 is implemented to receive a device control from a device 502 (*e.g.,* a controlling device) when the device control is initiated by a user of the device. The device control, for instance, may include any control message, information, setting, data, or configuration which is initially transmitted from the controlling device to control some aspect of the associated devices. The parental control service can then determine associated devices that are controllable by the device based on the associated devices identifiers 114, and communicate the device control received from the device 502 to the associated device 504 (and to any other controllable associated devices). Additionally, the parental control service 114 can control communication of hub information to the associated devices for the members of a hub, such as the family members of a family, employees of an organization, and so forth.

In embodiments, the parental control service 114 can receive feature use reports from the associated devices, such as from the associated device 504. The parental control service can then generate a device use summary of the device features that are used, and communicate the device use summary for the associated device 504 to the controlling device 502 for display. The parental control service 114 at the platform 508 can also implement any of the embodiments and features of mobile device parental control as described herein.

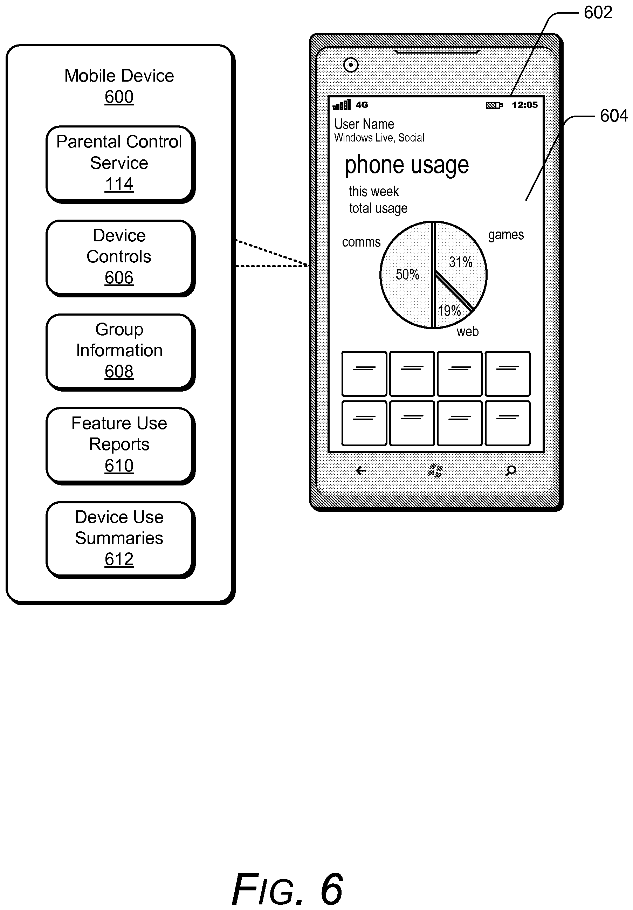

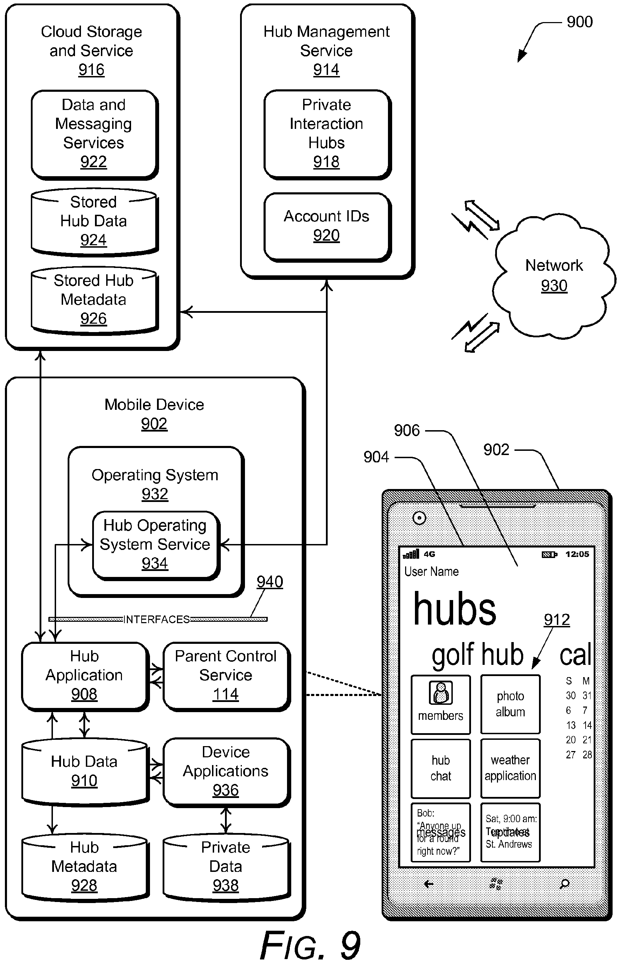

FIG. 6 illustrates an example mobile device in which embodiments of mobile device parental control can be implemented. The mobile device 600 is an example of the client device 102 or any of the other mobile devices 502, 504 described with reference to FIGS. 1-5, and can be implemented as a controlling device or an associated controlled device. The mobile device includes the parental control service 114 and can be implemented with various components, such as a processor and/or memory system, as well as any number and combination of differing components as further described with reference to the example device shown in FIGS. 9-12. The mobile device 600 includes an integrated display device 602 on which a parental control user interface 604 can be displayed. The parental control user interface 604 can include indications of setting changes to the parental control service.

In embodiments, the mobile device 600 is a controlling device that controls one or more associated devices, such as mobile phones for the members of a group that are family members of a family, or business members of a business. The parental control service 114 can receive an input of a device control 606 via the parental control user interface 604, where the device control is initiated for one or more associated devices that are controllable by the controlling device. Device controls can be initiated to control functions, settings, access, and/or restrictions of one or more of the associated devices. The parental control service can then initiate communication of the device control to the associated devices that are controlled by the controlling device. The parental control service 114 can also control communication of group information 608 to the associated devices for the members of the group.

The parental control service 114 can receive feature use reports 610 from the associated devices, where a feature use report indicates use of a device feature by a user of an associated device. The parental control service can then generate a device use summary 612 of device features for each of the associated devices, and the use summaries can be displayed on the parental control user interface (*e.g*., such as shown on the parental control user interface 604 in this example). A feature use report received from an associated device can include text message content, email content, and/or identification of a new contact. A feature use report can also indicate Internet use and include Internet sites visited, or indications of content downloads, such as a video, a game, a music file, and/or a purchase. A feature use report can also include telephone call details associated with a telephone call to or from an associated device.

### Example Procedures

The following discussion describes mobile device parental control techniques that may be implemented utilizing the previously described systems and devices. Aspects of each of the procedures may be implemented in hardware, firmware, or software, or a combination thereof. The procedures are shown as a set of blocks that specify operations performed by one or more devices and are not necessarily limited to the orders shown for performing the operations by the respective blocks. In portions of the following discussion, reference will be made to FIGS. 1-6.

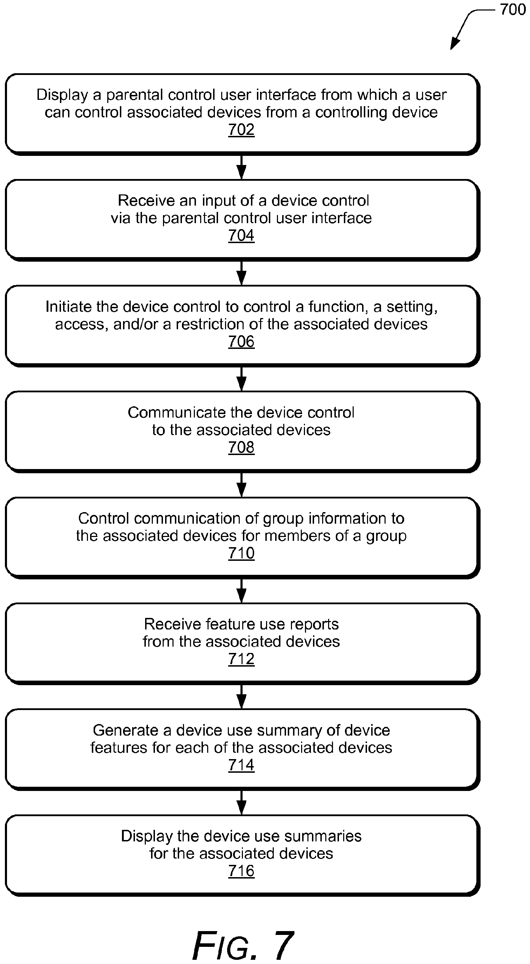

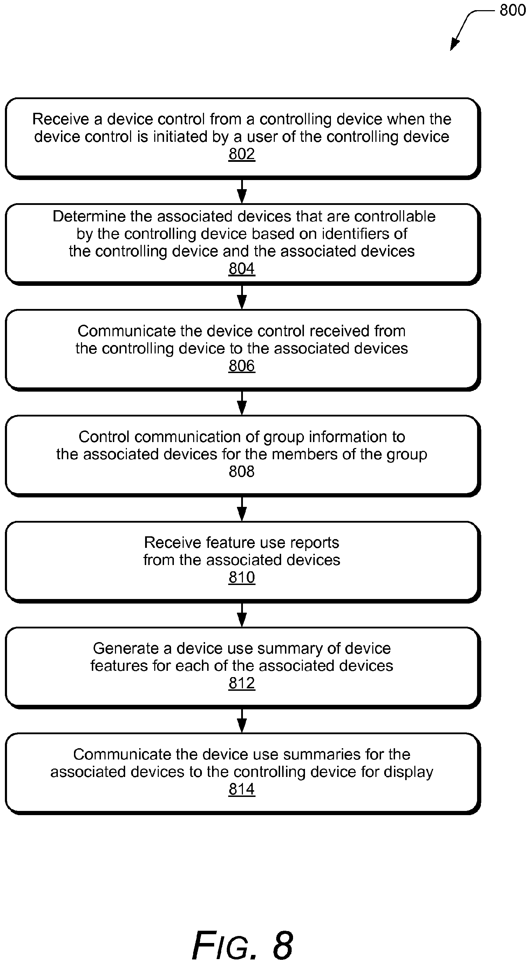

Example procedures 700 and 800 are described with reference to respective FIGS. 7 and 8 in accordance with one or more embodiments of mobile device parental control. Generally, any of the services, components, modules, methods, and operations described herein can be implemented using software, firmware, hardware (*e.g*., fixed logic circuitry), manual processing, or any combination thereof. Example methods may be described in the general context of executable instructions stored on computer-readable storage media that is local and/or remote to a computer processing system, and implementations can include software applications, programs, functions, and the like.

FIG. 7 illustrates example procedure 700 of mobile device parental control. The order in which the method blocks are described are not intended to be construed as a limitation, and any number of the described method blocks can be combined in any order to implement a method, or an alternate method.

At block 702, a parental control user interface is displayed from which a user can control associated devices from a controlling device. For example, the mobile device 600 (FIG. 6) includes an integrated display device 602 on which a parental control user interface 604 is displayed, and a user can control associated devices from the mobile device (*e.g*., the controlling device). Similarly, the various mobile devices (e.g., FIG. 5) each include an integrated display device to display a parental control user interface.

At block 704, an input of a device control is received via the parental control user interface. For example, the parental control service 114 implemented at the mobile device 600 receives an input of a device control 606 from a user via the parental control user interface 604. The device control is received for one or more associated devices that are controllable by the controlling device. Similarly, the parental control service 114 at the client device 102 receives inputs of device controls to control one or more associated devices.

At block 706, the device control is initiated to control a function, a setting, access, and/or a restriction of the associated devices. For example, the parental control service 114 implemented at the mobile device 600 initiates the device control 606 to control a function, a setting, access, and/or a restriction of associated devices.

At block 708, the device control is communicated to the associated devices. For example, the mobile device 600 communicates the device control 606 to one or more of the associated devices. The mobile and/or client devices include a communication interface for control communication with the associated devices of the controlling device.

At block 710, group information is controlled for communication to the associated devices for members of a group. For example, the parental control service 114 implemented at the mobile device 600 controls group information 608 that is communicated to the associated devices. In embodiments, a controlling device and the associated devices are mobile phones configured for wireless communication, and the members of a group are family members of a family, or business members of a business.

At block 712, feature use reports are received from the associated devices. For example, the parental control service 114 implemented at the mobile device 600 receives a feature use report 610 that indicates use of a device feature by a user of an associated device. The feature use reports 610 can include text message content, email content, and/or identification of a new contact. The feature use reports can also indicate Internet use and include Internet sites visited and/or content download indications of videos, games, music files, and/or purchases. The feature use reports can also include telephone call details associated with a telephone call to or from an associated device.

At block 714, device use summaries of device features for each of the associated devices are generated. For example, the parental control service 114 implemented at the mobile device 600 generates the device use summaries 612 of device features for each of the associated devices.

At block 716, the device use summaries for the associated devices are displayed. For example, the integrated display device 602 of the mobile device 600 displays the device use summaries 612 on the parental control user interface 604 (*e.g*., such as shown in the FIG. 6 example).

FIG. 8 illustrates example procedures 800 of mobile device parental control. The order in which the method blocks are described are not intended to be construed as a limitation, and any number of the described method blocks can be combined in any order to implement a method, or an alternate method.

At block 802, a device control is received from a controlling device when the device control is initiated by a user of the controlling device. For example, the parental control service 114 implemented as part of the platform 508 (FIG. 5) receives a device control from the mobile device 502 (*e.g.,* a controlling device) when the device control is initiated by a user of the mobile device. The device control can be initiated for one or more associated devices that correspond to one or more members of a group, and the device control is initiated at the controlling device to control functions, settings, access, and/or restrictions of the associated devices.

At block 804, the associated devices that are controllable by the controlling device are determined based on identifiers of the controlling device and the associated devices. For example, the parental control service 114 at the platform 508 determines the associated devices, such as the mobile device 504, based on the associated devices identifiers 114.

At block 806, the device control received from the controlling device is communicated to the associated devices. For example, the parental control service 114 at the platform 508 communicates the device control that is received from the mobile device 502 to the associated device 504. At block 808, communication of group information to the associated devices is controlled for the members of the group. For example, the parental control service 114 at the platform 508 controls communication of group information to the associated device 504.

At block 810, feature use reports are received from the associated devices. For example, the parental control service 114 at the platform 508 receives feature use reports from the mobile device 504, where a feature use report indicates use of a device feature by a user of the device. At block 812, device use summaries of device features for each of the associated devices are generated. For example, the parental control service 114 at the platform 508 generates device use summaries of the device features used for the mobile device 504. At block 814, the device use summaries for the associated devices are communicated to the controlling device for display. For example, the parental control service 114 at the platform 508 initiates communication of the device use summaries to the mobile device 502 for display in a parental control user interface at the device.

### Implementation Example

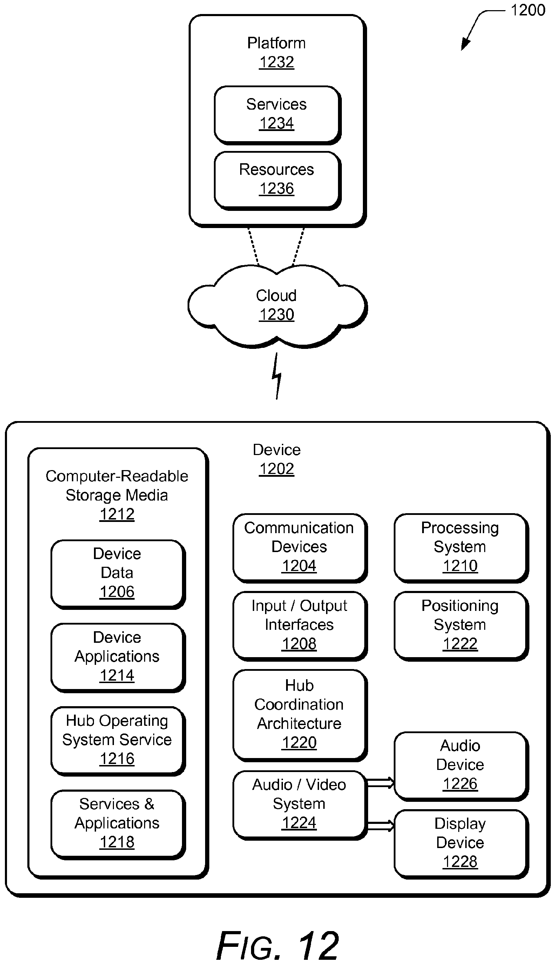

FIG. 9 illustrates an example system 900 in which embodiments of private interaction hubs can be implemented. The system 900 includes an example mobile device 902, which may be any one or combination of a wired or wireless device, such as a mobile phone, tablet, computing, communication, entertainment, gaming, media playback, and/or other type of device. Any of the devices can be implemented with various components, such as a processing system and memory, as well as any number and combination of differing components as further described with reference to the example device shown in FIG. 12. As such, the mobile device 902 may implement techniques previously described in whole in or part, such as the techniques described with reference to the parent control service 114.

The mobile device 902 includes an integrated display device 904 on which user interfaces can be displayed, such as a hub user interface 906 of a hub application 908. The hub user interface offers a unified interactive view of the hub data 910 for a single, private interaction hub and the hub application 908 aggregates disparate types of the hub data 910 originating from the various member users of the private interaction hub. For example, the hub user interface may provide a single unified access point to shared hub messages, status updates, check-ins, hub calendar events, hub media, hub applications, and other types of hub content. As described above, a private interaction hub (or simply "hub") is a private network or association of member users who voluntarily elect to privately interact and collaborate with each other in a bi-directional manner. The hub data 910 includes any shared data or metadata that is used to facilitate the interaction and collaboration between the members of a private interaction hub, and may include shared data for messaging, notes, contact management, documents, tasks, location updates, photos, calendar events, applications (to include collaborative gaming applications), and/or other media content, such as any type of audio, music, video, and/or image data that may be available or accessed from any source.

The basic functionality of an example private interaction hub is shown as a golf hub displayed in the hub user interface 906 of the hub application 908. For example, the hub user interface can include various selectable user interface tiles 912, such as a members tile that is selectable to initiate a display of the constituent members of the private interaction hub. The user interface tiles 912 may also include hub chat and/or messages tiles to allow a hub member to participate in shared messaging threads with the other member users of the hub. For example, as shown, the member "Bob" has asked "Anyone up for a round right now?" The user interface tiles 912 may also include a photo album tile that is selectable to view photos shared by any of the hub members with the hub, and a shared notebook tile from which the hub members can view shared notes. For example, the golf hub may include a shared notes document that compiles the hub members' collective research of new golf equipment. The hub user interface 906 may also display a shared calendar that allows a member of the hub to view, edit, and post calendar events that will be shared with all of the other hub members. For example, the calendar tile shows an upcoming tee time at St. Andrews on Saturday at 9:00 a.m. for all of the members. When a user selects a group item (e.g., the message from Bob) or tile (e.g., the messaging tile), further details about the selected item or group items related to the selected tile may be displayed by the hub application itself or the hub application may call a different device application 936 (e.g., a messaging application) to display further details about the item(s).

When a user selects or otherwise engages with a piece of displayed hub data, such as the golf message from Bob, the hub application may provide additional details or options to the user to permit the user to interact further with the hub data. For example, the hub application may display controls to allow the user to edit or reply to Bob's message. Alternatively or in addition, when a user selects or otherwise engages with a piece of displayed hub data (e.g., Bob's message), the hub application may launch or call another device application to permit the user to further interact with the piece of hub data (e.g., the hub application may call a native messaging application).

The hub user interface 906 of the hub application 908 can also include user-selectable access to third-party applications, such as when an application is "pinned" to, or otherwise shared with a private interaction hub. A pinned third-party application may also utilize the shared hub data, such as shared application preferences or shared application state data. For example, the golf hub shown displayed in the hub user interface 906 includes a live tile representing a third-party weather application that the members of the hub can quickly access to check the weather forecast at their local golf club, such as when planning an upcoming golf outing. A user of the mobile device 902 can also customize display aspects of a hub user interface, such as the content of the user interface and how the elements of the hub user interface are arranged. Another example of a hub user interface of the hub application 908 is a panoramic hub user interface, such as for a family-centric private interaction hub as shown and described in greater detail with reference to FIG. 2.

The example system 900 also includes a hub management service 914, and a cloud storage and service 916. The hub management service 914 manages the formation and maintenance of private interaction hubs 918. The hub management service can correlate or associate member users of a hub by associating account identifiers 920 of the members with one or more of the private interaction hubs. The account identifier 920 of a member user may be associated with an identifier of a private interaction hub 918 in a data table that the hub management service maintains to correlate the hub members with one or more of the private interaction hubs. The hub management service 914 may also associate devices that correspond to hub members based on device identifiers. The account identifiers 920 can include user membership identifiers and/or sign-on credentials, such as an email and password combination, or a username and password combination. The sign-on credentials may be single sign-on ("SSO") credentials that are utilized for authentication purposes at a number of Web services, including the cloud storage and service 916.

The cloud storage and service 916 can include any type of cloud-based (e.g., network-based) data and messaging services 922. The messaging services may include any type of email, text (e.g., SMS, MMS), and/or instant messaging services. The data services may include any type of calendar, photo album, file or document sharing, location, mapping, music sharing, video sharing, gaming, contacts management, and/or notebook services, as well as any other type of services that can be used to share stored hub data 924. The stored hub data can include any form of messages, updates, events, content, media, and information that is maintained for the private interaction hubs 918, and is accessible from the mobile device 902, either upon a request from a device and/or upon a data "push" to the device. The cloud storage and service 916 also maintains stored hub metadata 926 that includes settings and information pertaining to the private interaction hubs 918, such as the name of a hub, the background image or photo of the hub, and an association of the hub members.

Although shown together as data and messaging services 922, various application data services and various messaging services may be operated on separate devices and/or operated by separate, distinct entities. Additionally, although the hub management service 914 and the cloud storage and service 916 are shown as independent services, they may be implemented together as a single service. Further, a server device (or group of server devices) can include implementations of both the hub management service 914 and the cloud storage and service 916, representative of a single entity that may be the same server system, company system, domain, and the like.

The cloud storage and service 916, and its constituent data and messaging services 922, interchange the stored hub data 924 and the stored hub metadata 926 between the mobile devices that are associated with member users of a private interaction hub 918. For example, a data and/or messaging service of the cloud storage and service 916 can receive a copy of hub data 910 and/or hub metadata 928 from the mobile device 902 that is used by a hub member, store this hub data and hub metadata in the cloud storage as the respective stored hub data 924 and stored hub metadata 926, and then distribute the stored hub data and stored hub metadata to other mobile devices associated with other member users of the same private interaction hub, as well as to other mobile devices associated with the same hub member. The stored hub metadata 926 can include membership information pertaining to the member users of a private interaction hub, hub identifiers that correlate a piece of hub data to a particular private interaction hub, user identifiers that correlate a piece of hub data to a particular member user, modification dates, and/or other metadata.

The cloud storage and service 916, and its constituent data and messaging services 922, may utilize single sign-on ("SSO") credentials for authentication purposes to limit the dissemination of the stored hub data 924 and the stored hub metadata 926 to only the authorized devices of hub members. Additionally, any of the devices and services (e.g., implemented as server devices) described herein can communicate via a network 930, which can be implemented to include a wired and/or a wireless network. The network can also be implemented using any type of network topology and/or communication protocol, and can be represented or otherwise implemented as a combination of two or more networks, to include IP-based networks and/or the Internet. The network may also include mobile operator networks that are managed by a mobile network operator and/or other network operators, such as a communication service provider, mobile phone provider, and/or Internet service provider. Alternatively or in addition, peer-to-peer communication techniques may be utilized, such as multiple devices connected using a peer-to-peer communication network.

The mobile device 902 includes an operating system 932 of the device, and the operating system includes a hub operating system service 934 that is implemented to integrate cloud-based services, a hub application 908, and local device applications 936 with the operating system to implement aspects of the private interaction hubs 918. The aspects that may be implemented include hub formation and membership maintenance, synchronizing the hub data 910 on the mobile device with the stored hub data 924, and the hub metadata 928 with the stored hub metadata 926, with the cloud storage and service 916, and providing the hub application 908 and the local device applications 936 on the mobile device 902 with access to the hub data 910 and the hub metadata 928. For example, the hub operating system service 934 may directly access the stored hub metadata 926 at the cloud storage and service 916.

The hub operating system service 934 (or alternatively, the hub application 908) may also determine and maintain a local copy of the membership associations of member users account identifiers 920 and identifiers of the private interaction hubs. The hub operating system service 934 may also synchronize the stored hub data 924 from the cloud storage and service 916 with the hub data 910 at the mobile device 902, and synchronize the stored hub metadata 926 from the cloud storage and service with the hub metadata 928 at the mobile device. The hub operating system service 934 may also synchronize with the cloud storage and service 916 (e.g., by sending changes or additions to hub data 910 and hub metadata 928 to the cloud storage and service 916). Such data synchronizations may occur in response to a user launching the hub application.

The mobile device 902 includes the device applications 936 that permit a user of the mobile device to access, create, and/or modify the hub data 910, private data 938 of the user, as well as the stored hub data 924 that is managed by any of the data and messaging services 922 at the cloud storage and service 916. Some or all of the device applications 936 may be implemented as client-side components or modules of any of the data and messaging services 922, or may be implemented as standalone, native applications (e.g., local device applications) at the mobile device. The device applications 936 typically each consume and provide access to only a portion or subset of the hub data 910 and the private data 938, such as only a single type of hub data and private data (e.g., only messaging data, but not calendar data). The device applications also typically present the consumed hub data to a user in conjunction with the private data 938. Private data is data or metadata that is not associated with a private interaction hub and that has not been shared with other members of the hub (e.g., data that has not been shared via the cloud storage and service 916).

The device applications 936 at the mobile device 902 may include a native or third-party messaging application that provides a user with messaging alerts and access to messaging threads. The messaging application provides access to both shared message threads shared with a private interaction hub and private message threads between a user of the mobile device and others who are not members of the hub. The messaging application also allows a user to send a message to all of the hub members without accessing a hub user interface of the hub application. The messaging application may not provide user access to other types of the hub data 910, other than the hub messages. For example, the messaging application may not provide access to the shared calendar events or shared photo albums of the hub.

The device applications 936 may also include a native or third-party calendaring application that provides scheduling alerts and access to a visual calendar. The calendaring application provides user access to both shared calendar events that are shared with hub members, and private calendar events (e.g., Exchange calendar events) that have not been shared with other members of the hub. The calendaring application also allows a user to create and/or share a calendar event to all members of the hub without accessing a hub user interface of the hub application. The application may not provide user access to other types of the hub data 910, other than the hub calendar events. For example, the calendaring application may not provide access to the shared message threads or shared photo albums of the hub.

The device applications 936 may also include a native or third-party media viewing and/or editing application that provides access to photo albums of digital photos or other digital media. The media application provides user access to both shared media files (e.g., photos, videos, and/or music) shared with a private interaction hub, and private media files that have not been shared with other members of the hub. The media application also allows a user to share media files with all members of the hub without accessing a hub user interface of the hub application. The media application may not provide user access to other types of hub data 910, other than hub media files. For example, the media application may not provide access to the shared message threads or shared calendar events of the hub.

The hub operating system service 934 can expose one or more Application Programming Interfaces ("APIs"), application binary interfaces, and/or other types of interfaces 940 to the hub application 908 and to the device applications 936 on the mobile device 902 to allow these applications to access, generate, and/or modify the hub data 910 and/or the hub metadata 928, as described herein. The hub operating system service 934 can be implemented as an integrated software component or module of the operating system 932. The hub operating system service can be maintained at the mobile device 902 as executable instructions that are stored on computer-readable storage media, such as any suitable memory device or electronic data storage as described with reference to the example device shown in FIG. 12. Additionally, the hub operating system service can be executed with a processing system at the mobile device to implement aspects of private interaction hubs.

In embodiments, the hub operating system service 934 can initiate the hub management service 914 to provision a private interaction hub 918. A user of the mobile device 902 can start a private interaction hub 918 and also invite others to join an existing private interaction hub. For example, the hub user interface 906 of the hub application 908 may provide an existing hub member with the option to add a new member to the hub, and the user may identify the prospective member by providing either a mobile device number, or by selecting an existing contact from one of their social networks or other contacts.

The hub operating system service 934 can receive the request from an existing member user of the device and, in response, the hub operating system service 934 and/or the hub management service 914 communicates an invitation to join the hub as an SMS, MMS, or instant message sent to the prospective member's mobile device that may include a link to a registration site or other registration instructions. The hub operating system service 934 and/or the hub management service 914 receives (e.g., via a registration website) an acceptance to the invitation to join the private interaction hub that includes at least an account identifier (such as an SSO credential), and associates the new member with the existing hub at the hub management service 914. Updated membership information, including the new member's account identifier 920 may also be propagated to other mobile devices of other members in the private interaction hub from the hub management service 914. When the new member user joins the hub, he or she may be prompted to download and/or install various applications configured to provide access to the stored hub data 924 and the stored hub metadata 926, such as the hub application 908 and/or the any of the device applications 936. The hub application 908 may also be the entry point by which a user creates a new hub and/or modifies the membership of an existing hub.

A private interaction hub 918 can be provisioned for any association of people, such as family members, coworkers, friends, neighbors, and any other people that may be associated together in a hub. Additionally, a member user of one private interaction hub may also be a member of multiple hubs, which can be based on a single member sign-on that identifies the member to the hub operating system service 934 and/or to the hub management service 914. For example, a person may be a member of a family hub that associates members of the person's family, as well as a member of a neighborhood hub that associates members of the person's neighborhood, and a golf hub that associates the person's friends that often golf together.

The integration of the hub application 908 with the operating system 932 of the mobile device provides that a user of the device can view a message or update on the hub user interface 906 and in an application user interface of an application that is associated with the message or the update. For example, a hub calendar is integrated with the calendar application (e.g., a device application 936) on the mobile device 902, and a calendar update that is displayed in the hub user interface 906 can be selected by the user to initiate the update being displayed in a calendar user interface of the calendar application. Alternatively, the user may view the calendar user interface and select a calendar event that is associated with a private interaction hub to initiate a display of the hub calendar, which includes the calendar event for the members of the hub. As another example, a hub calendar event can be displayed in a hub user interface, and the device calendar application can access and display the hub calendar event along with any private data calendar events that only the user of the device has access to view in a user interface of the device calendar application. The hub application 908 and the device application 936 both acquire the same hub calendar event data (e.g., the same hub data 910 stored on the mobile device). The two different user interfaces (e.g., a hub user interface and a device application user interface) display the same calendar event data.

In another example, the hub messages and chat features are integrated with messaging applications (e.g., the device applications 936) on the mobile device 902, and an email, text, or instant message that is displayed in the hub user interface 906 can be selected by the user of the mobile device 902 to initiate the message being displayed in a messaging application user interface. Alternatively, the user may view a recent message from a member of a private interaction hub in a messaging application user interface, and select the message to initiate a display of the hub messages interface, such as to view the discussion thread associated with the recent message.

In embodiments, the hub operating system service 934 at the mobile device 902 can receive social network updates for the member users of a private interaction hub 918, such as when two or more of the members of a hub are also "friends" on a public social network site, such as (e.g., FACEBOOK®, TWITTER®, or LINKEDIN®). The social network updates can be pulled from a social network site based on the established association of the account identifiers 920 of the hub members of a private interaction hub 918 at the hub management service 914. The hub operating system service 934 can then aggregate the social network updates for a particular hub for display in the hub user interface 906 or on a homepage "live tile" associated with the hub. The hub operating system service 934 at the mobile device 902 can also be implemented to coordinate multi-user interactive updates to an event that is managed in a private interaction hub. For example, several members of a hub may participate in a multi-player interactive game, and each successive interactive update from a member of the hub is initiated by the member at a respective associated mobile device.

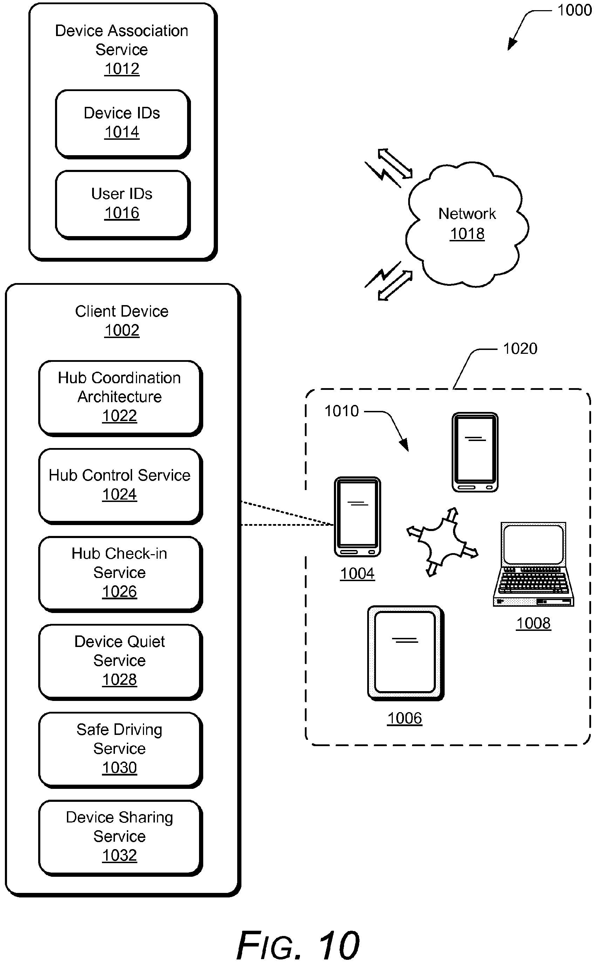

FIG. 10 illustrates an example system 1000 in which various embodiments of the previously described techniques can be implemented. The example system includes a client device 1002, which may be any one or combination of a mobile phone 1004, tablet device 1006, computing device 1008, communication, entertainment, gaming, navigation, and/or other type of portable electronic device as previously described. Any of the client devices 1010 can be implemented with various components, such as a processor and/or memory system, as well as any number and combination of differing components as further described with reference to the example device shown in FIG. 12 to implement embodiments of the techniques described herein.

The example system 1000 includes a device association service 1012 that associates or correlates the client devices 1010 by device identifiers 1014, user identifiers 1016, and/or by any other type of identifiable association. Any of the devices and services can communicate via a network 1018, which can be implemented to include wired and/or wireless networks. The network can also be implemented using any type of network topology and/or communication protocol, and can be represented or otherwise implemented as a combination of two or more networks, to include IP-based networks and/or the Internet. The network may also include mobile operator networks that are managed by mobile operators, such as a communication service provider, cell-phone provider, and/or Internet service provider. A mobile operator can facilitate mobile data and/or voice communication for any type of a wireless device or mobile phone.

The client devices 1010 can each be associated with a different user, and the users are defined members of a hub 1020. The example client device 1002 is representative of the various client devices 1010 in the hub. Any of the client devices in the family can include services, such as software applications (e.g., computer-executable instructions), that can be executed by a processor or processor system to implement the embodiments described herein. In this example, the client device 1002 includes a hub coordination architecture 1022 that implements features of a hub; a hub control service 1024 that implements features of a hub dashboard; a hub check-in service 1026; a device quiet service 1028 that implements features of quiet time and quiet zone; a safe driving service 1030; and a device sharing service 1032.

Additionally, any one or combination of the various client device services may be abstracted for implementation by a network service provider, such as the device association service 1012. For example, the client devices 1010 that are associated in the hub 1020 can be interconnected through a central computing device or system (e.g., may be one of the client devices 1010), which may be local to the multiple devices or may be located remotely from the devices. In embodiments, the central computing device may be a cloud service of one or more server computers that are connected to the multiple devices via the communication network 1018 or other communication link. The interconnection architecture enables functionality across multiple devices to provide a common and seamless experience to a user of the multiple devices. Each of the client devices may have different physical configurations and capabilities, and the central computing device implements a platform to enable delivery of an experience that is both tailored to a particular device and yet common to all of the devices.

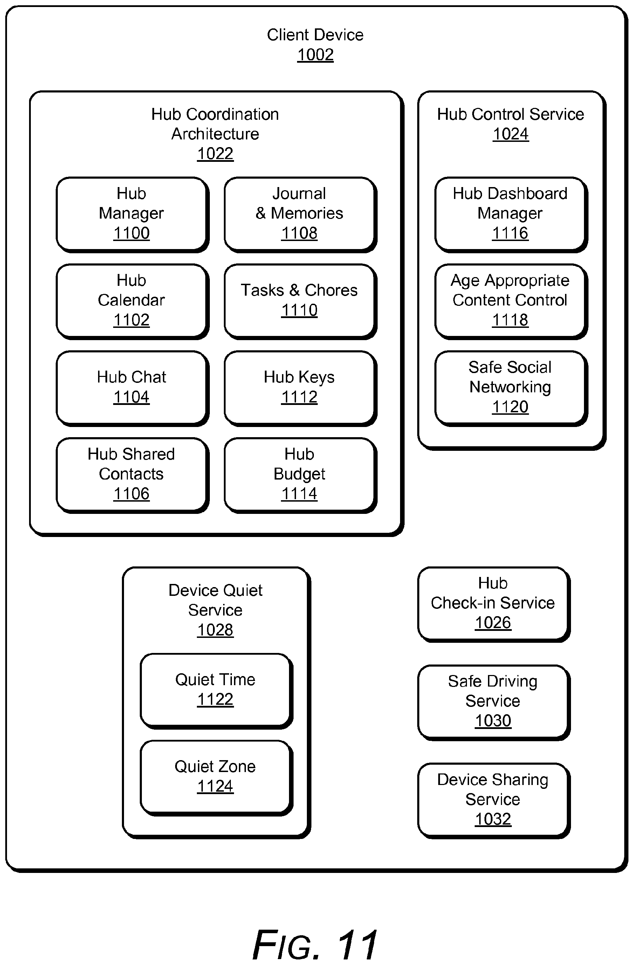

FIG. 11 further illustrates the various client device services that are described with reference to the previous sections. The client device 1102 includes the hub coordination architecture 1022, the hub control service 1024, the hub check-in service 1026, the device quiet service 1028, the safe driving service 1030, and the device sharing service 1032. In embodiments, the hub coordination architecture 1022 may generally be implemented as a service, as described herein. Generally, any of the described services may be implemented and/or described in the general context of software, firmware, hardware (e.g., fixed logic circuitry), manual processing, applications, routines, programs, objects, components, data structures, procedures, modules, functions, or any combination thereof. A software implementation represents program code that performs specified tasks when executed by a computer processor. In embodiments, any of the processing, computation, filtering, code execution, etc. can be implemented with distributed computing services and/or devices, such as on a client device, a server device, and/or network-based service.

In this example of the client device services, the hub coordination architecture 1022 includes a hub manager 200 that implements, coordinates, and/or manages various hub features, such as hub calendar 1102, hub chat 1104, hub shared contacts 1106, hub journal and memories 1108, tasks and chores 1110, hub keys 1112, and hub budget 1114. The hub control service 1024 implements features such as a hub dashboard manager 1116, age appropriate content control 1118, and safe social networking 1120. The device quiet service 1028 implements features such as quiet time 1122 and quiet zone 1124. The various client device services and features are further described throughout the document.

Any of the client device services can include, be integrated with, or implement any of the other client device services and applications. For example, the hub coordination architecture 1022 can include any one or combination of the hub control service 1024, the hub check-in service 1026, the device quiet service 1028, the safe driving service 1030, and the device sharing service 1032. In embodiments, the hub coordination architecture 1022 may be implemented for the coordination of time, messaging, data, activities, and any other shared services. The shared services may be any of the client device services and/or any type of shared services that may be associated with a service and/or multi-system operator (MSO) devices. Further, the hub control service 1024 can be implemented to throttle, expand, manage, and/or reallocate data sharing of the client device services. Any of the hub features and/or applications of the hub coordination architecture can be implemented as private, some private and some public, or private with optional user control to share information and data with public third-party services and applications. Similarly, any of the client device services and applications described herein may be private, public, sharable, user-controllable, and/or any combination thereof.

FIG. 12 illustrates an example system 1200 that includes an example device 1202, which can implement embodiments of private interaction hubs. The example device 1202 can be implemented as any of the devices, services, and/or servers previously described, such as any type of client or mobile device (e.g., mobile phone, tablet, computing, communication, entertainment, gaming, media playback, and/or other type of device). For example, the mobile device 902, parental control service 114, and/or cloud service and storage 916 shown in FIG. 9 may be implemented as the example device 1202.

The device 1202 includes communication devices 1204 that enable wired and/or wireless communication of device data 1206, such as media content and the shared messages, updates, and events data at the device. The media content can include any type of audio, video, and/or image data. The communication devices 1204 can also include transceivers for cellular phone communication and/or for network data communication.

The device 1202 also includes input / output (I/O) interfaces 1208, such as data network interfaces that provide connection and/or communication links between the device, data networks, and other devices. The I/O interfaces can be used to couple the device to any type of components, peripherals, and/or accessory devices. The I/O interfaces also include data input ports via which any type of data, media content, and/or inputs can be received, such as user inputs to the device, as well as any type of audio, video, and/or image data received from any content and/or data source.

The I/O interfaces 1208 also support natural user interface (NUI) inputs to the device 1202, such as any interface technology that enables a user to interact with a device in a "natural" manner, free from artificial constraints imposed by input devices such as mice, keyboards, remote controls, and the like. Examples of natural user interface inputs may rely on speech recognition, touch and stylus recognition, gesture recognition on-screen and motion gesture recognition proximate the device, head, eye, and environment recognition and tracking, augmented reality and virtual reality systems, and any other type of audible, vision, touch, gesture, and/or machine intelligence that may determine user input intentions.

The device 1202 includes a processing system 1210 that may be implemented at least partially in hardware, such as with any type of microprocessors, controllers, and the like that process executable instructions. The processing system can include components of an integrated circuit, programmable logic device, a logic device formed using one or more semiconductors, and other implementations in silicon and/or hardware, such as a processor and memory system implemented as a system-on-chip (SoC). Alternatively or in addition, the device can be implemented with any one or combination of software, hardware, firmware, or fixed logic circuitry that may be implemented with processing and control circuits. The device 1202 may further include any type of a system bus or other data and command transfer system that couples the various components within the device. A system bus can include any one or combination of different bus structures and architectures, as well as control and data lines.

The device 1202 also includes computer-readable storage media 1212, such as data storage devices that can be accessed by a computing device, and that provide persistent storage of data and executable instructions (e.g., software applications, programs, functions, and the like). Examples of computer-readable storage media include volatile memory and non-volatile memory, fixed and removable media devices, and any suitable memory device or electronic data storage that maintains data for computing device access. The computer-readable storage media can include various implementations of random access memory (RAM), read-only memory (ROM), flash memory, and other types of storage media in various memory device configurations.

Generally, computer-readable storage media is representative of media and/or devices that enable persistent and/or non-transitory storage of data in contrast to mere signal transmission, carrier waves, or signals per se. A computer-readable signal media may refer to a signal-bearing medium that transmits instructions, such as via a network. The signal media can embody computer-readable instructions as data in a modulated data signal, such as carrier waves or other transport mechanism.

The computer-readable storage media 1212 provides storage of the device data 1206 and various device applications 1214, such as an operating system that is maintained as a software application with the computer-readable storage media and executed by the processing system 1210. In this example, the device applications also include an hub operating system service 1216 that implements embodiments of private interaction hubs, such as when the example device 1202 is implemented as the client device 902 shown in FIG.9. An example of the hub operating system service 1216 is the hub operating system service 924 that is integrated with the operating system 922 at the mobile device 902, as described with reference to FIG. 9.

The device applications 1214 can also include any of the hub services and applications 1218 that implement embodiments of private interaction hubs and/or mobile devices family coordination, such as described with reference to FIGS. 9-11. The example device 1202 also includes a hub coordination architecture 1220, which may be implemented in the general context of software, firmware, hardware (e.g., fixed logic circuitry), or any combination thereof to support embodiments of private interaction hubs and/or mobile devices family coordination. The device 1202 can also include a positioning system 1222, such as a GPS transceiver, or similar positioning system components, that can be utilized to determine a global or navigational position of the device.

The device 1202 also includes an audio and/or video system 1224 that generates audio data for an audio device 1226 and/or generates display data for a display device 1228. The audio device and/or the display device include any devices that process, display, and/or otherwise render audio, video, display, and/or image data. In implementations, the audio device and/or the display device are integrated components of the example device 1202. Alternatively, the audio device and/or the display device are external, peripheral components to the example device.

In embodiments, at least part of the techniques described for private interaction hubs may be implemented in a distributed system, such as over a "cloud" 1230 in a platform 1232. The cloud 1230 includes and/or is representative of the platform 1232 for services 1234 and/or resources 1236. For example, the services 1234 may include the hub management service 908 and the cloud service and storage 910 as described with reference to FIG. 9. Additionally, the resources 1236 may include any of the messaging applications and the collaborative applications as described previously.

The platform 1232 abstracts underlying functionality of hardware, such as server devices (e.g., included in the services 1234) and/or software resources (e.g., included as the resources 1236), and connects the example device 1202 with other devices, servers, etc. The resources 1236 may also include applications and/or data that can be utilized while computer processing is executed on servers that are remote from the example device 1202. Additionally, the services 1234 and/or the resources 1236 may facilitate subscriber network services, such as over the Internet, a cellular network, or Wi-Fi network or a combination of these or other similar networks. The platform 1232 may also serve to abstract and scale resources to service a demand for the resources 1236 that are implemented via the platform, such as in an interconnected device embodiment with functionality distributed throughout the system 1200. For example, the functionality may be implemented in part at the example device 1202 as well as via the platform 1232 that abstracts the functionality of the cloud 1230.

Although embodiments of mobile device parental controls have been described in language specific to features and/or methods, the appended claims are not necessarily limited to the specific features or methods described. Rather, the specific features and methods are disclosed as example implementations of mobile device parental controls.

## Claims

1. A controlling device (600; 902; 1202), comprising:
a communication interface configured for control communication with one or more associated devices of the controlling device, the one or more associated devices and the controlling device corresponding to members of a hub, the hub being a private shared space to share data between the members of the hub;
an integrated display device (602; 904; 1228) configured to display a parental control user interface, and a hub user interface (906), the hub user interface configured for offering a unified interactive view of hub data for the hub;
a processing system to implement computer instructions as a parental control service (114) that is configured to:
receive an input of a device control via the parental control user interface, the device control to control a function, a setting, access, and/or a restriction of the one or more of the associated devices that are controllable by the controlling device;
initiate communication of the device control to the one or more associated devices; and
control communication of hub information to the one or more associated devices for the members of the hub.

2. A controlling device as recited in claim 1, wherein the parental control service (114) is configured to:
receive feature use reports from the one or more associated devices, a feature use report indicating use of a device feature by a user of an associated device;
generate a device use summary of device features for each of the one or more associated devices; and
initiate a display of the device use summaries for one or more of the associated devices.

3. A controlling device as recited in claim 1, wherein the parental control service (114) is configured to receive a feature use report from an associated device, the feature use report including at least one of text message content, email content, or identification of a new contact.

4. A controlling device as recited in claim 1, wherein the parental control service (114) is configured to receive a feature use report from an associated device, the feature use report indicating at least one of:
Internet use and including Internet sites visited; or
a content download indication of at least one of a video, a game, a music file, or a purchase.

5. A method, comprising:
displaying (702) a parental control user interface from which a user can control one or more associated devices from a controlling device (600; 902; 1202), the one or more associated devices and the controlling device corresponding to members of a hub, displaying a hub user interface (906) offering a unified interactive view of hub data for the hub, the hub being a private shared space to share data between the members of the hub;
and implementing a parental control service comprising:
receiving (704) an input of a device control via the parental control user interface, the device control to control a function, a setting, access, and/or a restriction of the one or more of the associated devices that are controllable by the controlling device; and
communicating (708) the device control to the one or more associated devices
controlling communication of hub information to the one or more associated devices for members of the hub group.

6. A method as recited in claim 5, further comprising:
receiving (712) feature use reports from the one or more associated devices, a feature use report indicating use of a device feature by a user of an associated device;
generating (714) a device use summary of device features for each of the one or more associated devices; and
displaying (716) the device use summaries for one or more of the associated devices.

7. A method as recited in claim 5, further comprising receiving (712) a feature use report from an associated device, the feature use report including at least one of text message content, email content, or identification of a new contact.

8. A method as recited in claim 5, further comprising receiving (712) a feature use report from an associated device, the feature use report indicating at least one of:
Internet use and including Internet sites visited; or
a content download indication of at least one of a video, a game, a music file, or a purchase.

9. A method as recited in claim 5, further comprising receiving (712) a feature use report from an associated device, the feature use report including telephone call details associated with a telephone call to or from the associated device.

10. One or more computer-readable storage media storing computer-executable instructions which, when executed by a processor of a controlling device, cause the controlling device to perform the method of any of claims 5-9.

## Patentansprüche

1. Steuervorrichtung (600; 902; 1202), die Folgendes umfasst:
eine Kommunikationsschnittstelle, die zum Steuern von Kommunikation mit einer oder mehr assoziierten Vorrichtungen der Steuervorrichtung konfiguriert ist, wobei die eine oder mehr assoziierten Vorrichtungen und die Steuervorrichtung Mitglieder eines Hubs darstellen, wobei der Hub eine private geteilte Oberfläche zum Teilen von Daten zwischen den Mitgliedern des Hubs ist;
eine integrierte Anzeigevorrichtung (602; 904; 1228), die konfiguriert ist, um eine Kinderschutz-Benutzeroberfläche anzuzeigen, und eine Hub-Benutzeroberfläche (906), wobei die Hub-Benutzeroberfläche konfiguriert ist, um eine vereinheitlichte interaktive Ansicht von Hubdaten für den Hub zu bieten;
ein Verarbeitungssystem zum Umsetzen von Computeranweisungen als Kinderschutzservice (114), das konfiguriert ist, um:
eine Eingabe einer Vorrichtungssteuerung über die Kinderschutz-Benutzeroberfläche zu empfangen, damit die Vorrichtungssteuerung eine Funktion, eine Einstellung, Zugriff und/oder Einschränkung der einen oder mehr assoziierten Vorrichtungen, die von der Steuervorrichtung steuerbar sind, steuert;
Kommunikation der Vorrichtungssteuerung zu der einen oder mehr assoziierten Vorrichtungen zu initiieren, und
Kommunikation von Hubinformationen zu der einen oder mehr assoziierten Vorrichtungen für die Mitglieder des Hubs zu steuern.

2. Steuervorrichtung nach Anspruch 1, wobei der Kinderschutzservice (114) konfiguriert ist, um:
Merkmalgebrauchsberichte von der einen oder mehr assoziierten Vorrichtungen zu empfangen, wobei ein Merkmalgebrauchsbericht den Gebrauch eines Vorrichtungsmerkmals durch einen Benutzer einer assoziierten Vorrichtung angibt;
eine Vorrichtungsgebrauchsübersicht von Vorrichtungsmerkmalen für jede des einen oder mehr assoziierten Vorrichtungen zu erzeugen, und
eine Anzeige der Vorrichtungsgebrauchsübersichten für eine oder mehr assoziierten Vorrichtungen zu initiieren.

3. Steuervorrichtung nach Anspruch 1, wobei der Kinderschutzservice (114) konfiguriert ist, um einen Merkmalgebrauchsbericht von einer assoziierten Vorrichtung zu empfangen, wobei der Merkmalgebrauchsbericht mindestens einen Textnachrichteninhalt, E-Mail-Inhalt oder Identifikation eines neuen Kontakts einschließt.

4. Steuervorrichtung nach Anspruch 1, wobei der Kinderschutzservice (114) konfiguriert ist, um einen Merkmalgebrauchsbericht von einer assoziierten Vorrichtung zu empfangen, wobei der Merkmalgebrauchsbericht mindestens eines der Folgenden angibt:
Internetgebrauch und einschließlich besuchte Websites; oder
einen Hinweis auf Herunterladen von Inhalt mindestens eines von einem Video, einem Spiel, einer Musikdatei oder einem Kauf.

5. Verfahren, das Folgendes umfasst:
Anzeigen (702) einer Kinderschutz-Benutzeroberfläche, von der ein Benutzer eine oder mehr assoziierten Vorrichtungen von einer Steuervorrichtung (600; 902; 1202) steuern kann, wobei die eine oder mehr assoziierten Vorrichtungen und die Steuervorrichtung Mitglieder eines Hubs darstellen, Anzeigen einer Hubbenutzeroberfläche (906), die eine vereinheitlichte interaktive Ansicht von Hubdaten für den Hub bietet, wobei der Hub eine private geteilte Oberfläche zum Teilen von Daten zwischen den Mitgliedern des Hubs ist;
und Umsetzen eines Kinderschutzservices, das Folgendes umfasst:
Empfangen (704) einer Eingabe einer Vorrichtungssteuerung über die Kinderschutz-Benutzeroberfläche, damit die Vorrichtungssteuerung eine Funktion, eine Einstellung, einen Zugriff und/oder eine Einschränkung der einen oder mehr assoziierten Vorrichtungen, die durch die steuernde Vorrichtung steuerbar sind, steuert, und
Kommunizieren (708) der Vorrichtungssteuerung zu der einen oder den mehr assoziierten Vorrichtungen,
Steuern von Kommunikation von Hubinformationen zu der einen oder mehr assoziierten Vorrichtungen für Mitglieder der Hubgruppe.

6. Verfahren nach Anspruch 5, weiter umfassend:
Empfangen (712) von Merkmalgebrauchsberichten von der einen oder den mehr assoziierten Vorrichtungen, wobei ein Merkmalgebrauchsbericht den Gebrauch eines Vorrichtungsmerkmals durch einen Benutzer einer assoziierten Vorrichtung angibt;
Erzeugen (714) einer Vorrichtungsgebrauchsübersicht für jede der einen oder der mehr assoziierten Vorrichtungen, und
Anzeigen (716) der Vorrichtungsgebrauchsübersichten für eine oder mehr der assoziierten Vorrichtungen.

7. Verfahren nach Anspruch 5, das weiter das Empfangen (712) eines Merkmalgebrauchsberichts von einer assoziierten Vorrichtung umfasst, wobei der Merkmalgebrauchsbericht mindestens einen eines Textnachrichtinhalts, E-Mail-Inhalts oder Identifikation eines neuen Kontakts einschließt.

8. Verfahren nach Anspruch 5, das weiter das Empfangen (712) eines Merkmalgebrauchsberichts von einer assoziierten Vorrichtung umfasst, wobei der Merkmalgebrauchsbericht mindestens eines der Folgenden angibt:
Internetgebrauch und einschließlich besuchte Websites; oder
einen Hinweis auf Herunterladen von Inhalt mindestens eines von einem Video, einem Spiel, einer Musikdatei oder einem Kauf.

9. Verfahren nach Anspruch 5, das weiter das Empfangen (712) eines Merkmalgebrauchsberichts von einer assoziierten Vorrichtung umfasst, wobei der Merkmalgebrauchsbericht Einzelheiten eines Telefonanrufs, die mit einem Telefonanruf zu oder von der assoziierten Vorrichtung assoziiert sind, einschließt.

10. Ein oder mehr computerlesbare Speichermedien, die computerausführbare Anweisungen speichern, die, wenn sie von einem Prozessor einer Steuervorrichtung ausgeführt werden, die Steuervorrichtung veranlassen, das Verfahren nach einem der Ansprüche 5 bis 9 auszuführen.

## Revendications

1. Dispositif de contrôle (600 ; 902 ; 1202), comprenant :
une interface de communication configurée pour le contrôle de communication avec un ou plusieurs dispositifs associés du dispositif de contrôle, les un ou plusieurs dispositifs associés et le dispositif de contrôle correspondant à des membres d'une plateforme, la plateforme étant un espace partagé privé pour partager des données entre les membres de la plateforme ;
un dispositif d'affichage intégré (602 ; 904 ; 1228) configuré pour afficher une interface utilisateur de contrôle parental, et une interface utilisateur de plateforme (906), l'interface utilisateur de plateforme étant configurée pour offrir une vue interactive unifiée de données de plateforme pour la plateforme ;
un système de traitement pour mettre en oeuvre des instructions informatiques comme un service de contrôle parental (114) qui est configuré pour :
recevoir une entrée d'un contrôle de dispositif via l'interface utilisateur de contrôle parental, le contrôle de dispositif pour contrôler une fonction, un réglage, l'accès, et/ou une restriction des un ou plusieurs des dispositifs associés qui peuvent être contrôlés par le dispositif de contrôle ;
initier une communication du contrôle de dispositif avec les un ou plusieurs dispositifs associés ; et
contrôler la communication d'informations de plateforme avec les un ou plusieurs dispositifs associés pour les membres de la plateforme.

2. Dispositif de contrôle selon la revendication 1, dans lequel le service de contrôle parental (114) est configuré pour :
recevoir des rapports d'utilisation d'élément provenant des un ou plusieurs dispositifs associés, un rapport d'utilisation d'élément indiquant l'utilisation d'un élément de dispositif par un utilisateur d'un dispositif associé ;
générer un résumé d'utilisation de dispositif d'éléments de dispositif pour chacun des un ou plusieurs dispositifs associés ; et
initier un affichage des résumés d'utilisation de dispositif pour un ou plusieurs des dispositifs associés.

3. Dispositif de contrôle selon la revendication 1, dans lequel le service de contrôle parental (114) est configuré pour recevoir un rapport d'utilisation d'élément provenant d'un dispositif associé, le rapport d'utilisation d'élément incluant au moins un parmi un contenu de message texte, un contenu de courrier électronique, ou l'identification d'un nouveau contact.

4. Dispositif de contrôle selon la revendication 1, dans lequel le service de contrôle parental (114) est configuré pour recevoir un rapport d'utilisation d'élément provenant d'un dispositif associé, le rapport d'utilisation d'élément indiquant au moins un parmi :
l'utilisation Internet et incluant les sites Internet visités ; ou
une indication de téléchargement de contenu d'au moins un parmi une vidéo, un jeu, un fichier de musique ou un achat.

5. Procédé, comprenant :
l'affichage (702) d'une interface utilisateur de contrôle parental depuis laquelle un utilisateur peut contrôler un ou plusieurs dispositifs associés depuis un dispositif de contrôle (600 ; 902; 1202), les un ou plusieurs dispositifs associés et le dispositif de contrôle correspondant à des membres d'une plateforme, l'affichage d'une interface utilisateur de plateforme (906) offrant une vue interactive unifiée de données de plateforme pour la plateforme, la plateforme étant un espace partagé privé pour partager des données entre les membres de la plateforme ;
et la mise en oeuvre d'un service de contrôle parental comprenant :
la réception (704) d'une entrée d'un contrôle de dispositif via l'interface utilisateur de contrôle parental, le contrôle de dispositif pour contrôler une fonction, un réglage, l'accès, et/ou une restriction des un ou plusieurs des dispositifs associés qui peuvent être contrôlés par le dispositif de contrôle ; et
la communication (708) du contrôle de dispositif avec les un ou plusieurs dispositifs associés
le contrôle de la communication d'informations de plateforme avec les un ou plusieurs dispositifs associés pour des membres du groupe de la plateforme.

6. Procédé selon la revendication 5, comprenant en outre :
la réception (712) de rapports d'utilisation d'élément depuis les un ou plusieurs dispositifs associés, un rapport d'utilisation d'élément indiquant l'utilisation d'un élément de dispositif par un utilisateur d'un dispositif associé ;
la génération (714) d'un résumé d'utilisation de dispositif d'éléments de dispositif pour chacun des un ou plusieurs dispositifs associés ; et
l'affichage (716) des résumés d'utilisation de dispositif pour un ou plusieurs des dispositifs associés.

7. Procédé selon la revendication 5, comprenant en outre la réception (712) d'un rapport d'utilisation d'élément provenant d'un dispositif associé, le rapport d'utilisation d'élément incluant au moins un parmi un contenu de message texte, un contenu de courrier électronique, ou l'identification d'un nouveau contact.

8. Procédé selon la revendication 5, comprenant en outre la réception (712) d'un rapport d'utilisation d'élément provenant d'un dispositif associé, le rapport d'utilisation d'élément indiquant au moins un parmi :
l'utilisation Internet et incluant les sites Internet visités ; ou
une indication de téléchargement de contenu d'au moins un parmi une vidéo, un jeu, un fichier de musique ou un achat.

9. Procédé selon la revendication 5, comprenant en outre la réception (712) d'un rapport d'utilisation d'élément provenant d'un dispositif associé, le rapport d'utilisation d'élément incluant des détails d'appel téléphonique associés à un appel téléphonique vers ou depuis le dispositif associé.

10. Un ou plusieurs supports de stockage lisible par ordinateur stockant des instructions exécutables par ordinateur qui, lorsqu'elles sont exécutées par un processeur d'un dispositif de contrôle, amènent le dispositif de contrôle à effectuer le procédé selon l'une quelconque des revendications 5 à 9.
